# EUROPEAN PATENT APPLICATION

(11) **EP 3 050 629 A1**
(43) Date of publication of application: **03.08.2016**
(21) Application number: 15153152.2
(22) Date of filing: 30.01.2015
(51) Int. Cl.: B04B 1/20

(54) **Solid bowl centrifuge**

(71) Applicant: Andritz S.A.S., 78140 Velizy-Villacoublay (FR)
(72) Inventor: Dousset, Christian, 36000 Chateauroux (FR); Huyghe, Jean-Marc, 36330 Le Poinconnet (FR); Pasol, Laurentiu, 75015 Paris (FR)
(74) Representative: Schweinzer, Friedrich

(57) **Abstract**

The invention relates to a solid bowl centrifuge with a horizontal elongated, hollow, rotatable, solid-wall bowl (2) with an inlet and an outlet and a rotatable screw conveyor (5) with a shaft and helical screw (7) rotatable mounted inside said bowl and extending substantially the full length thereof. It is mainly characterized in that on the shaft there are mounted a number of truncated conical discs (24), whereby the discs (24) are surrounded by the helical screw (7). With such design the decanter capacity can be increased and the polymer consumption reduced. Further power consumption can be reduced by obtaining the same performances as the traditional decanter at lower rotational speed (lower g-force).

## Description

The invention relates to a solid bowl centrifuge with a horizontal elongated, hollow, rotatable, solid-wall bowl with an inlet and an outlet and a rotatable screw conveyor with a shaft and helical screw rotatable mounted inside said bowl and extending substantially the full length thereof.

Solid bowl centrifuges are used to separate solids from a liquid for different applications such as e.g. in sludge applications. Most solid bowl centrifuges include an elongated conveyor screw with a shaft and surrounded by a continuous screw flight. The suspension to be separated is supplied through an inlet often in the form of an inlet tube which extends coaxially with the axis of rotation of the centrifuge. The scroll can be in counter-current design where the solids and the liquid are moving in opposite directions inside the bowl. In this case the feed chamber is far from the liquid outlet, approximately in the central part of the conveyor. Another type of scroll conveyor can be in co-current design where the liquid and the solids are moving in the same direction inside the bowl. In this case the feed chamber is close to liquid discharge but the mixture cannot bypass the process. It is moving with the solids towards the conical part of the decanter until it reaches a point when it overflows into the tubes fixed on the scroll body and then it moves back to the liquid discharge (see the figure 2). In US 5 310 399 a sedimentation centrifuge is shown in which between the turns of the screw a plurality of helical fins extending parallel to the turns is mounted. In such arrangements the solid particles trend to clog the gaps between the fins and thus reduce the operation capacity and separation accuracy of the centrifuge. In this patent the scroll is counter-current design.

It is therefore an object of the present invention to provide a solid bowl centrifuge for various applications without clogging which also can separate a slurry or sludge with high separation accuracy, a large amount of feed and a reduced amount of energy consumed.

The invention is thus characterized in that on the shaft there are mounted a number of truncated conical discs, whereby the discs are surrounded by the helical screw. This allows an easy manufacture of the shaft with the discs and flight and gives the possibility that flight gives the possibility to convey the driest cake on the inner surface of the bowl towards the solid outlet. The discs can have a variable angle relative to the rotational axis from 0° - 180°. A further embodiment of the invention is characterized in that the diameter of the discs varies along the length of the shaft. With such feature the separation can be adjusted to the solids content of the feed. It further takes into account the layers of the sedimented solids inside the machine during the operation. Thus there is no clogging even with high solid content.

Another embodiment of the invention is characterized in that the distance between the discs varies along the length of the shaft. With a gap different between the discs it can be taken into account the solid load as well as the local concentration of the mixture in the machine. Also the clogging between discs can be avoided.

An improved embodiment of the invention is characterized in that the diameter of the discs increases and the distance between the discs decreases progressively close to the (liquid) outlet. This improves the sedimentation and clarification time inside the centrifuge.

An advantageous improvement of the invention is characterized in that at least a part of the discs have openings, whereby the openings may have the form of holes or windows with different shapes and an uniform distribution or a non- uniform distribution. With such openings or holes the sedimentation is improved while the risk of particles re-suspension is reduced. So the mixture is forced to spend more time between the discs without stagnation flows (dead zones) in order to improve the sedimentation and clarification time. In a uniform distribution the openings of the discs are all in an axis parallel to the axis of rotation. In a non-uniform distribution the mixture will spend more time between the discs, which improves the sedimentation. These truncated conical discs can be installed on a scroll with co-current and counter-current design.

The invention is now explained by example in the following figures, where
Fig. 1 shows a decanter centrifuge from the state of the art
Fig. 2 shows an embodiment of the solid bowl centrifuge according to the invention
Fig. 3 shows a part of the scroll with a different distance between the discs,
Fig. 4 shows an embodiment of the invention with different gaps and different diameters,
Fig. 5 shows an embodiment of the invention with a uniform distribution of holes in the discs,
Fig. 6 shows an embodiment of the invention with a non-uniform distribution of holes in the discs.

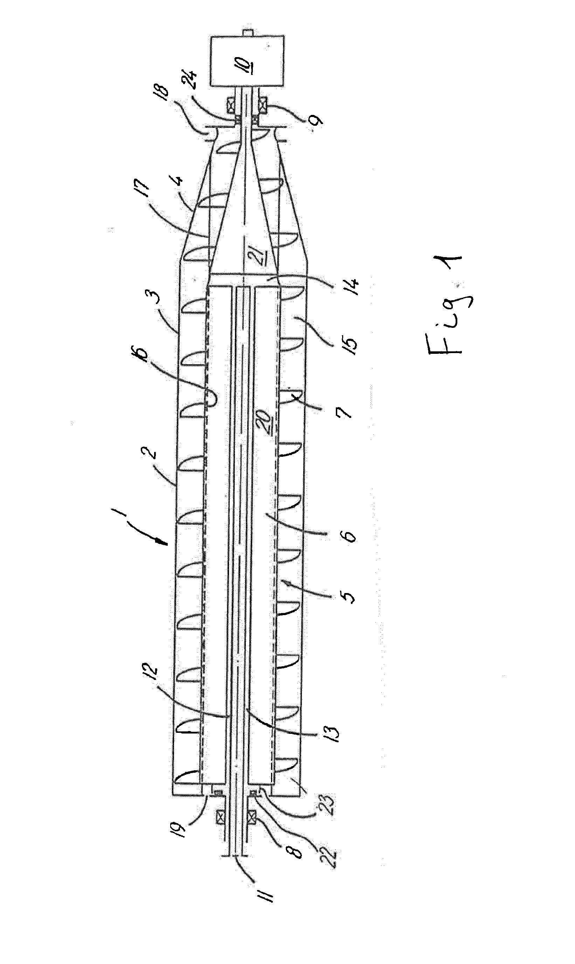

The decanter centrifuge 1 in Fig. 1 according to the state of the art consists of a horizontal, axially symmetrical bowl 2 with a cylindrical section 3 and a conical section 4. The bowl 2 includes an elongated conveyor screw 5 with a central body portion or shaft 6 and surrounded by a continuous screw flight 7. The bowl 2 is at its ends rotatable supported in bearings 8 and 9, respectively, and is driven via a gear 10 ensuring in a known manner that bowl 2 and conveyor 5 in operation rotate relative to each other.

The suspension to be separated is supplied through an inlet 11 in the form of an inlet tube 12 and extending coaxially with the axis of rotation of the centrifuge through a central passage 13 provided in the shaft 6. The tube 12 ends in a transverse, radial passage 14 discharging into the separating space 15 of the centrifuge. The liquid level in operation is illustrated in dotted lines 16 and solid lines 17. After separation in space 15 solids are discharged through apertures 18 while liquid is discharged through the holes 19 at the end of the bowl.

Conveyor 5 is constructed as a hollow body with closed cavities 20 and 21. Further a radial support bearing 22 is provided with the radial external surface being adapted to cooperate with the radial internal surface of s circular collar 23 on the shaft 6.

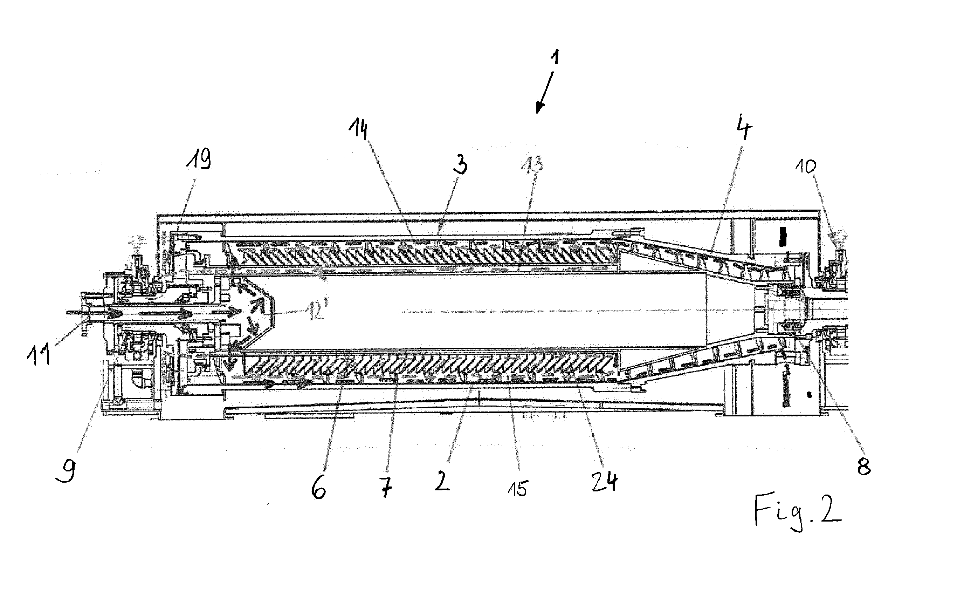

In Fig. 2 a solid bowl centrifuge 1 according to the invention is shown. Similar parts have the same reference numeral as in Fig. 1. It has as well a bowl 2 with a cylindrical section 3 and a conical section 4. There is also a screw flight 7 (with co-current design), however this flight 7 more or less scratches at the inner surface of the cylindrical section 3 of bowl 2. Directly mounted on the shaft 6 are a number of discs 24, which here are shown as conical discs. These discs are surrounded by screw flight 7. To allow the liquid (in most cases water) to be separated and discharged a central passage 13 is provided. At the outer radial passage 14 the mixture of liquid and solid particles is transported in direction to the conical section 4 where the separated solids are discharged. The solid particles due to gravity are transported to the outer diameter of the bowl 2 while the liquid phase is recovered due to overflow in the center of the bowl. With the high number of disks 24 in a conical design the surface will be inclined to the axis of the bowl 2. Therefore liquid is flowing only through a small layer of particles. Further the sedimentation speed of the particles is increased, which leads to a shorter clarification time. So the decanter capacity can be increased and the necessary polymer consumption reduced. Another option would be to save energy by running the decanter centrifuge at a lower bowl speed but keeping the same performances compared with traditional decanters at high bowl speed.

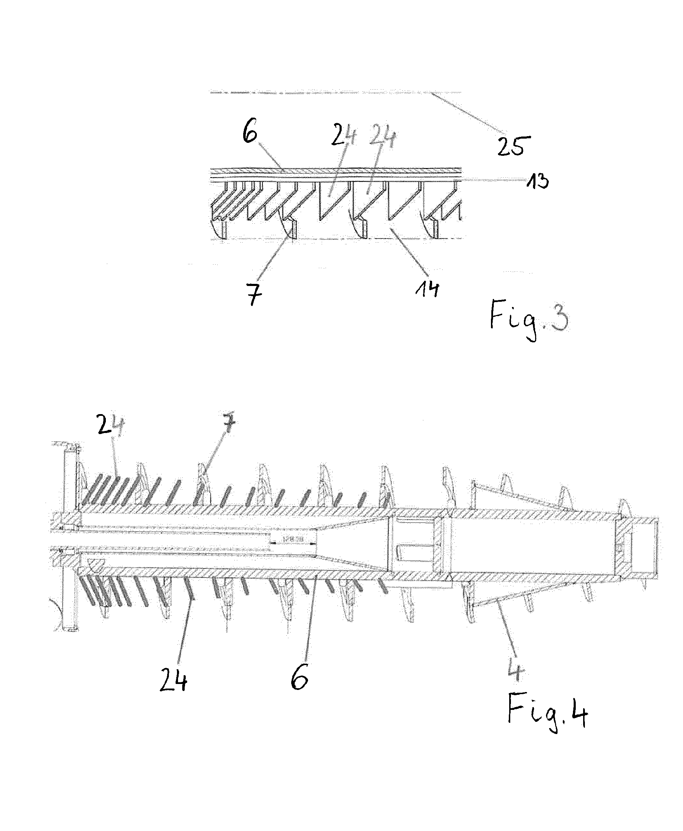

Fig. 3 shows a section of the shaft 6. This part rotates around the axis of rotation 25 of the whole bowl. At the outside of the shaft 6 there is the central passage 13 while on the distance from the shaft 6 there is the radial passage 14 where the liquid solid mixture is introduced and after the separation mainly by gravity the solids are transported by the screw flights 7 to the conical section. On the shaft there are mounted a number of discs 24 between which the separation of liquid and solids takes place.

In Fig. 4 a design with different disc diameters and different gaps between the discs 24 (with a scroll in counter-current design) is shown. Here the number and diameters of the discs 24 are increasing progressively close to the liquid outlet. With such design an intermediate and high load can be managed with the decanter.

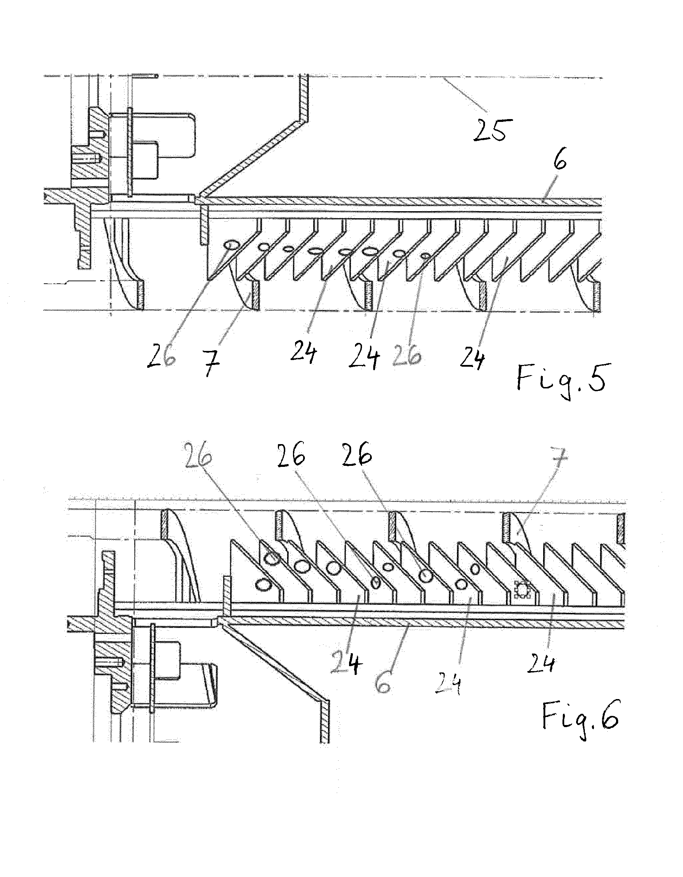

Fig. 5 shows another embodiment of the invention. Here the discs 24 have holes 26, where the distribution is uniform, i.e. the holes 26 are on the same axis. With such holes the flows between the discs 24 can be improved especially for thickening applications. Instead of holes also openings in the form of windows with different shapes may be used. Also there will be less turbulence for the liquid, which will reduce the re-suspension of the solids inside the decanter.

Fig. 6 shows a different arrangement of the holes 26 in the discs 24. Here there is a non-uniform distribution of the holes 26. By this measure the flowing time between the discs will be extended and thus a better sedimentation is achieved.

## Claims

1. Solid bowl centrifuge with a horizontal elongated, hollow, rotatable, solid-wall bowl with an inlet and an outlet and a rotatable screw conveyor with a shaft and helical screw rotatable mounted inside said bowl and extending substantially the full length thereof, **characterized in that** on the shaft there are mounted a number of truncated conical discs, whereby the discs are surrounded by the helical screw.

2. Solid bowl centrifuge according to claim 1, **characterized in that** only a part of the shaft is covered with discs.

3. Solid bowl centrifuge according to claim 1 or 2, **characterized in that** the diameter of the discs varies along the length of the shaft.

4. Solid bowl centrifuge according to any of claims 1 to 3, **characterized in that** the distance between the discs varies along the length of the shaft.

5. Solid bowl centrifuge according to claim 3 or 4, **characterized in that** the diameter of the discs increases and the distance between the discs decreases progressively close to the (liquid) outlet.

6. Solid bowl centrifuge according to any of claims 1 to 5, **characterized in that** at least a part of the discs have openings.

7. Solid bowl centrifuge according to claim 6, **characterized in that** the openings have the form of holes or windows with different shapes.

8. Solid bowl centrifuge according to claim 6 or 7, **characterized in that** the openings have an uniform distribution.

9. Solid bowl centrifuge according to claim 6 or 7, **characterized in that** the openings have a non- uniform distribution.

10. Solid bowl centrifuge according to any of claims 1 to 9, **characterized in that** the truncated conical discs have an angle of 0° to 180° relative to the rotational axis.

11. Solid bowl centrifuge according to any of the preceding claims, **characterized in that** the discs can be mounted on co-current or counter-current designs.
